# EUROPEAN PATENT SPECIFICATION

(11) **EP 3 475 122 B1**
(45) Date of publication and mention of the grant of the patent: **05.04.2023**
(21) Application number: 16901571.6
(22) Date of filing: 13.05.2016
(51) Int. Cl.: B60Q 3/00, B60Q 3/78

(54) **TRIM PART COMPRISING A DECORATIVE ELEMENT COMPRISING A LIGHTING PORTION**
VERKLEIDUNGSTEIL MIT EINEM DEKORATIVEN ELEMENT MIT EINEM BELEUCHTUNGSABSCHNITT
PIÈCE DE GARNITURE COMPRENANT UN ÉLÉMENT DÉCORATIF COMPRENANT UNE PARTIE D'ÉCLAIRAGE

(43) Date of publication of application: 01.05.2019
(73) Proprietor: Faurecia Interior Systems India Pvt. Ltd., Pune, Maharashtra 411026 (IN)
(72) Inventor: SIDDIQUI, Firoz, Pune Maharashtra State 411018 (IN); KARAD, Madhura, Pune Maharashtra 413411 (IN)
(74) Representative: Lavoix
(86) International application number: PCT/IB2016/052799
(87) International publication number: WO 2017/195002

(56) References cited:
- EP-A1- 2 786 899
- WO-A1-2009/005784
- DE-A1- 10 118 426
- DE-C1- 19 809 613
- US-A1- 2007 014 122
- US-A1- 2011 221 589
- US-B2- 6 616 313

## Description

The present invention relates to a trim element for a vehicle compartment of the type comprising an external surface intended to be visible from the interior of the vehicle compartment and a decorative element extending on part of the external surface, said decorative element comprising an inner face applied against the external surface and an outer face opposite the inner face and intended to be visible from the interior of the vehicle compartment, the decorative element comprising a main body and a lighting portion, and a light source in said lighting portion.

DE 198 09 613 C1 describes a trim part for a vehicle compartment according to preamble of claim 1, in particular a door trim element.

WO 2009/005784 A1 describes a panel assembly for a passenger compartment of a vehicle.

DE 101 18 426 A1 describes a lighting device on a vehicle seat of a motor vehicle, which can be pivoted between a position of use and a stowed position.

It is known to provide light sources in a vehicle compartment, for example for lighting a part of the vehicle compartment, for example for allowing a passenger to read or consult a map. Such light sources should be arranged such that they do not disturb the driver of the vehicle and possibly other passengers of the vehicle. To this end, the light source are for example arranged to be very directive and to have a low light diffusion such that only a reduced space of the vehicle compartment is lighted by this light source.

However, the light source is generally placed is a wall of the vehicle compartment, for example the roof panel, and is spaced by large distance from the point that is to be lighted, which is generally in a space extending over the legs of the passenger. Consequently, the light can still be disturbing for the other passengers of the vehicle. Additionally, the light source is fixed in the vehicle compartment and the lighted area cannot be changed or can be change only slightly, for example if the light source is movable in rotation relative to the trim panel on which it is mounted.

Furthermore, when the light source is turned off, the light source remains visible from the interior of the vehicle compartment and can be detrimental to the aspect of the trimming of the vehicle compartment.

One of the aims of the invention is to overcome these problems by providing a trim part comprising a light source that is integrated in a satisfactory manner to the external surface of the trim element.

To this end, the invention relates to a trim part according to claim 1.

Since the light source is hidden in the off position, the light source can be placed on any trim part of the vehicle compartment without degrading its aspect since the light source is integrated in a decorative element. Consequently, the light source can be placed closer to the area to be lighted and be less disturbing for the other passengers of the vehicle.

According to other features of the trim part according to the invention, the trim part is according to any of claims 2 to 6.

Other aspects and advantages of the invention will appear upon reading the following description, given by way of example and made in reference to the appended drawings, wherein:
- Fig. 1 is a front view of a trim part according to the invention, the decorative element being in a locked position,
- Fig. 2 is a front view of the trim part of Fig. 1, the decorative element being in an unlocked position and the light area being in an off position,
- Fig. 3 is a front view of the trim part of Fig. 1, the decorative element being in an unlocked position and the light area being in an position,
- Fig. 4 is a cross-section view along axis IV-IV of Fig. 1, and
- Fig. 5 is a cross-section view along axis V-V of Fig. 3.

In the description, the terms "internal", "external", "inner" and "outer" are defined relative to the interior of a vehicle compartment, "internal" or "inner" designating what is turned toward the body of the vehicle and "external" or "outer" designating what is turned toward the interior of the vehicle compartment.

In reference to the figures, there is described a trim part 1 intended for trimming a part of a vehicle compartment, i.e. intended to be applied against a part of the vehicle compartment to decorate this part and/or to provide a surface for supporting functional elements of the vehicle, such as storage spaces, control buttons, etc. Such a trim part 1 is for example a door panel, a roof panel, a dashboard, a central console, a tray, or any other trim part.

The trim part 1 comprises an external surface 2 forming the visible surface of the trim part 1 from the interior of the vehicle compartment. This means that the external surface 2 forms part of the visible surface of the vehicle compartment exposed to the eye of the passengers of the vehicle. The external surface 2 can have any shape, in particular adapted to the shape of the portion of the vehicle compartment on which the trim part is applied.

The trim part 1 comprises a decorative element 4 extending on part of the external surface 2. Such a decorative element 4 has for example a shape of a rod, as shown in the figures, or any other shape adapted to confer a particular aspect to the external surface 2 of the trim part 1, such as a medallion, a plate or any other desired shape.

The decorative element 4 is therefore an insert attached to the external surface 2 to confer a local particular aspect to the trim part.

The decorative element 4 comprises an inner face 6, extending opposite the external surface 2 of the trim part 1, and an outer face 8, extending opposite the inner face 6 and facing the interior of the vehicle compartment. The maximum distance separating the inner face 6 from the outer face 8 is for example less than arounded 70mm.

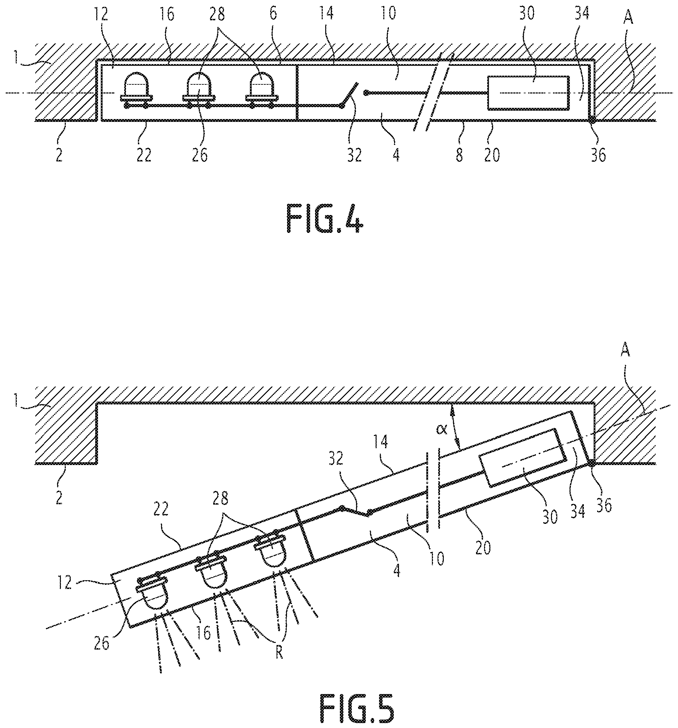

The outer face 8 is arranged to have a satisfactory aspect, for example by being coated with a decorative layer. The inner face 6 can be housed in a slight recess formed in the external surface 2 of the trim part 1, as shown in Figs. 4 and 5, and, according to an embodiment, the decorative element 4 can be arranged such that its outer face 8 protrudes from the external surface 2 or such that the outer face 8 is flush with the external surface 2.

The decorative element 4 comprises a main body 10 and a lighting portion 12 extending in the continuity of each other and attached to each other to form the decorative element 4. In case of a decorative element 4 in the shape of a rod, the lighting area 12 for example forms one extreme part of the rod and the main body forms the remainder of the rod.

The main body 10 is for example formed of a hollow element forming a support for the lighting portion 12, which is also formed as a hollow element attached to the main body 10.

The inner face 6 of the decorative element 4 is formed by the inner face 14 of the main body 10 and by the inner face 16 of the lighting portion 12. Similarly, the outer face 8 of the decorative element 4 is formed by the outer face 20 of the main body 10 and by the outer face 22 of the lighting portion 12.

Both the outer face 20 of the main body 10 and the outer face 22 of the lighting portion are substantially opaque, meaning that light substantially does not pass through these outer faces 20 and 22 at least when said light comes from the side of the outer faces 20 and 22 extending opposite the inner faces 14 and 16. In other words, light is substantially not transmitted through the outer faces 20 and 22 when said light originates from the space extending between the inner faces 14 and 16 and the outer faces 20 and 22. By "substantially not transmitted", it is meant that less than 5% of the light is transmitted through the outer faces 20 and 22 and preferably that none of the light is transmitted through the outer faces 20 and 22. This can be obtained by making the outer faces 20 and 22 in an opaque material or by applying a coating of opaque material to the outer faces 20 and 22. Advantageously, the opaque material is chosen to confer a satisfactory aspect to the decorative element 4, for example to be in concordance with the other decorative elements of the vehicle compartment. For example, the opaque material can be chosen to confer a wood aspect to the decorative element when other decorative elements of the vehicle compartment have a wood aspect. According to an embodiment, the outer face 20 of the main body 10 and the outer face 22 of the lighting portion 12 have a continuous aspect such that the outer face 6 of the decorative element 4 has an uniform aspect when seen from the vehicle compartment.

At least a portion of the inner face 16 of the lighting portion 12 is arranged such that light is transmitted through the inner face 16 of the lighting portion 12. More particularly, the inner face 16 of the lighting portion 12 is arranged such that the light originating from the space 24 extending between the outer face 22 and the inner face 16 of the lighting portion 12. By transmitting, it is meant that at least 5% of the light is transmitted through the inner face 16 and preferably that at least 90% of the light is transmitted through the inner face 16. This can be obtained by making the inner face 16 of the lighting portion 12 in a translucent or transparent material or by providing one or more apertures extending through the inner face 16 in the areas where light is to be transmitted through the inner face 16.

The inner face 14 of the main body 10 can be either opaque or translucent. For example, the inner face 14 of the main body 10 is made of the same material as the outer face 20 such that the main body 10 is made of a single material. According to another example, the inner face 14 of the main body 10 is made of the same material as the inner face 16 of the lighting portion 12.

The lighting portion 12 comprises at least one light source 26 arranged inside the lighting portion 12 between the inner face 16 and the outer face 22. Such a light source 26 comprises for example one or more light-emitting diodes 28 arranged to emit light when powered by a power source 30, for example placed in the main body 10, as shown diagrammatically in Figs. 4 and 5. The light source(s) 26 is(are) electrically connected to the power source 30 via a switch 32, which is actionable between an open position (Fig. 4) in which the electrical connection between the power source 30 and the light source(s) 26 is interrupted such that the light source does not emit light, and a closed position (Fig. 5) in which the electrical connection between the power source 30 and the light source(s) 26 is established such that the light source emits light.

When the inner face 16 of the lighting portion 12 is provided with at least one aperture, the light sources 26 are arranged opposite the aperture. For example, each light-emitting diode 28 is arranged opposite one aperture such that the light emitted by this diode 26 is emitted through the corresponding aperture.

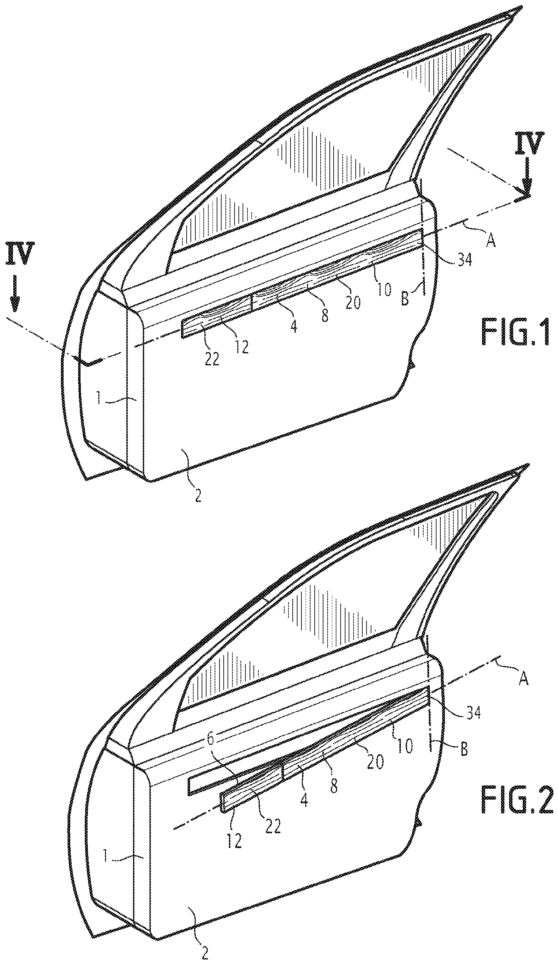

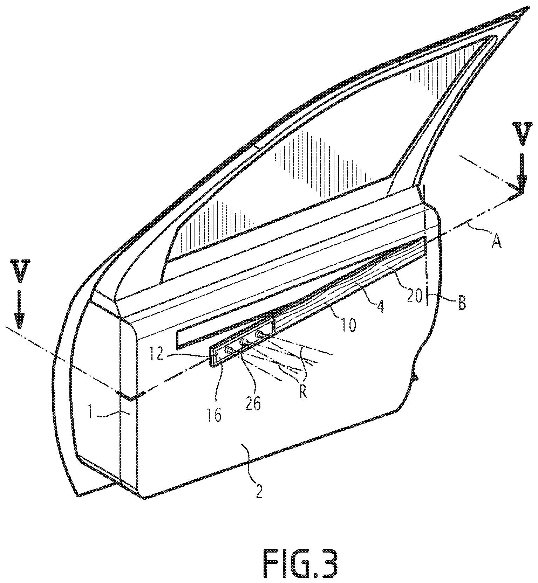

The lighting portion 12 is movable relative to the main body 10 between an off position, in which the inner face 16 of the lighting portion 12 is not visible from the vehicle compartment, as shown in Figs. 1, 2 and 4, and an on position, in which the inner face 16 of the lighting portion 12 is visible from the vehicle compartment. In other words, in the off position, the decorative element 4 cannot emit light towards the vehicle compartment since the inner face 16 of the lighting portion 12 is not visible and the outer face 22 does not let light pass through towards the vehicle compartment, while in the on position, the decorative element 4 can diffuse light in the vehicle compartment since the inner face 16 is visible from the vehicle compartment and the light coming from the light source(s) 26 is transmitted through the inner face 16, as shown by light rays R of Figs. 3 and 5.

The lighting portion 12 is movable in rotation relative to the main body 10 between the off and on positions. More particularly the rotation occurs around the main axis A along which the decorative element 4 extends. For example, in the case of a decorative element 4 in the shape of a rod, the rotation axis A corresponds to the axis of the rod as shown in Figs. 1 and 4.

In the off position, the inner face 16 of the light portion 12 extends in the continuity of the inner face 14 of the main body 12 and is turned towards the external surface 2 of the trim part 1 such that it is not visible from the vehicle compartment.

In the on position, the inner face 16 is turned relative to the inner face 14 of the main body 10 such that the inner face 16 is turned towards the vehicle compartment and away from the external surface 2. The rotation angle by which the inner face 16 of the lighting portion 12 is turned relative to the inner face 14 of the main body 10 defines the position in which the inner face will be in the on position. For example, the rotation angle is 180° such that the inner face 16 of the lighting portion 12 extends in the continuity of the outer face 20 of the main body 10 in the on position, as shown in Figs. 3 and 5.

According to another embodiment, the lighting portion 12 is movable in a plurality of on positions, the rotation angle varying between the successive on positions. One of these on positions for example corresponds to a rotation angle of 180° as described above.

According to an embodiment, the switching of the switch 32 between the open and closed positions is triggered by the movement in rotation of the lighting portion 12 relative to the main body 10 between the off position and the on position. In other words, the switch 32 is in the open position when the lighting portion 12 is in the off position and the switch is moved to the closed position when the lighting portion 12 is turned towards the on position and is in the on position when the lighting portion 12 is in the on position. When the lighting portion 12 is movable between in a plurality of on positions, the switching of the switch 32 in the closed position occurs when the lighting portion 12 is moved in the first on position, i.e. the on position with the smallest rotation angle. Consequently according to this embodiment, the light source 26 is powered only when the lighting portion 12 is in an on position and the light source 26 is not powered when the lighting portion is in the off position. According to another embodiment, the switch is triggered manually by the user, for example via a button accessible to the user when the lighting portion 12 is in an on position.

The movement of the lighting portion 12 in the on position is for example controlled by the user which can act on the lighting portion 12 to turn the lighting portion towards the on position.

According to the invention, the decorative element 4 is further movable relative to the external surface 2 of the trim part 1 between a locked position (Figs. 1 and 4) and an unlocked position (Figs. 2, 3 and 5).

In the locked position, the inner face 6 of the decorative element 4 is applied against the external surface 2 of the trim part 1 meaning that both the inner face 14 of the main body 10 and the inner face 16 of the lighting portion 12 are applied against the external surface 2. According to the invention, the lighting portion 12 is not able to move to an on position when the decorative element 4 is in the locked position.

In the unlocked position, the inner face 6 of the decorative element 4 is spaced from the external surface 2 of the trim part 1. According to an embodiment, the lighting portion 12 can be moved in an on position only when the decorative element 4 is in the unlocked position.

The movement of the decorative element 4 between the locked position and the unlocked position is a rotation movement of the decorative element 4 relative to the external surface 2. More particularly, the end 34 of the main body 10 opposite the lighting portion 12 is mounted in rotation on the external surface 2, for example via a hinge 36 connecting the outer face of the end 34 to the external surface 2, around a rotation axis B contained in the external surface 2 and perpendicular to the rotation axis A of the lighting portion 12.

The movement of the decorative element 4 therefore allows spacing the lighting portion 12 from the external surface 2 of the trim part 1 when placed in the unlocked position. In this manner, the light source(s) 26 can be brought closer to the area to be lighted such that the light source is less of a nuisance for the other passengers of the vehicle.

The movement of the decorative element 4 towards the unlocked position is for example limited to prevent the decorative element 4 to come into contact with a passenger. To this end, the maximum rotation angle a of the decorative element 4 between the locked position and the unlocked position is for example equal to 20° in order to limit the intrusion of the decorative element 4 in the vehicle compartment in the unlocked position. This can be obtained for example by arranging a resilient element around the rotation axis B.

The triggering of the movement of the decorative element 4 is for example obtained by a push-push device (not shown) arranged between the trim part 1 and the inner face 6 of the decorative element 4. Such a device is known and is actuable when the decorative element 4 is in the locked position. The push-push device allows moving the decorative element 4 from the locked position to the unlocked position by pushing against the outer face 8 of the decorative element 4 and to move back the decorative element 4 into the locked position also by pushing on the outer face 8 of the decorative element 4 until the decorative element 4 is applied against the external surface 2 of the trim part 1.

According to an embodiment, the lighting portion 12 can be arranged to automatically move towards an on position when the decorative element 4 is moved from the locked position to an unlocked position. Conversely, the lighting portion 12 can also be arranged to automatically move back to the off position when the decorative element 4 is moved to the locked position.

According to this embodiment, combined with the embodiment wherein the switch 32 is moved to the closed position by the movement of the lighting portion in an on position, it is possible to obtain the lighting of an area with a single actuation of the user to move the decorative element from the locked position to the unlocked position. Conversely, a single actuation to move the decorative element 4 from the unlocked position to the locked position is required to switch off the light source(s) 26 and to reposition the decorative element 4 in its initial position.

According to another embodiment, the movement of the lighting portion 12 between the off position and the on position(s) is performed by the user by rotating the lighting portion 12. This embodiment allows having a position wherein the decorative element 4 is applied against the external surface 2 of the trim part 1 while the lighting portion 12 is in an on position. In this position, the inner face 14 of the main body 10 and the outer face 22 of the lighting portion 12 are applied against the external surface 2. Such a position can be advantageous in that the light source(s) 26 illuminate an area of the vehicle compartment while the decorative element 4 does not protrudes in the vehicle compartment.

The trim part 1 described above therefore allows having a light source that can be positioned precisely to illuminate a particular area of the vehicle compartment without disturbing the other passengers. Furthermore, the light source(s) remain invisible when not in use since in the off position, only the outer face 6 of the decorative element 4 is visible from the vehicle compartment. By having a continuous aspect over the whole outer face 6 of the decorative element 4, only a slight demarcation between the main body 10 and the lighting portion 12 is visible from the vehicle compartment when the light source is in the off position. Consequently, in the off position, the decorative element 4 looks like any other decorative element of the vehicle compartment which improves the appearance of the trimming of the vehicle compartment.

## Claims

1. Trim part (1) for a vehicle compartment comprising an external surface (2) intended to be visible from the interior of the vehicle compartment and a decorative element (4) extending on part of the external surface (2), said decorative element (4) comprising an inner face (6, 14, 16) applied against the external surface (2) and an outer face (8, 20, 22) opposite the inner face (864) and intended to be visible from the interior of the vehicle compartment, the decorative element (4) comprising a main body (10) and a lighting portion (12), and a light source (26) in said lighting portion (12), wherein, in the lighting portion (12), the outer face (22) is arranged such that the light from the light source (26) is not visible through said outer face (22) and the inner face (16) is arranged such that the light from the light source (26) is visible through said inner face (16), the lighting portion (12) being movable relative to the main body (10) between an off position, wherein the inner face (16) of the lighting portion (12) is turned towards the external surface (2) and the light from the light source (26) is not visible from the interior of the vehicle compartment, and at least one on position, wherein the inner face (16) of the lighting portion (12) is moved away from the external surface (2) such that the light from the light source (26) is diffused in the vehicle compartment,
wherein the lighting portion (12) is movable in rotation relative to the main body (10) around an axis (A) of the decorative element (4) along which said decorative element (4) extends,
**characterized in that** the inner face (16) of the lighting portion (12) extends in the continuity of the inner face (14) of the main body (10) in the off position and being turned by a rotation angle relative to the inner face (14) of the main body (10) in the on position,
wherein the rotation angle is 180° in one on position such that the inner face (16) of the lighting portion (12) extends in the continuity of the outer face (20) of the main body (10) in said on position,
wherein the decorative element (4) is movable relative to the external surface (2) between a locked position, wherein the inner face (6, 14, 16) of the decorative element (4) is applied against the external surface (2) and an unlocked position, wherein the inner face (6, 14, 16) of the decorative element (4) is spaced from the external surface (2), and
wherein the lighting portion (12) is not movable to an on position in the locked position of the decorative element (4) and is movable to an on position in the unlocked position of the decorative element (4), and
wherein the decorative element (4) is movable in rotation relative to the external surface (2) around a rotation axis (B) substantially perpendicular to the axis (A) of the decorative element (4) along which said decorative element (4) extends and contained in the external surface (2) between the locked position and the unlocked position.

2. Trim part according to claim 1, comprising a push-push device actuable in the locked position to move the decorative element (2) from the locked position to the unlocked position.

3. Trim part according to claim 1 or 2, comprising a power source (30) connected to the light source (26) and a switch (32) between the power source (30) and the light source (26), said switch (32) being turned off when the lighting portion (12) is in the off position such that the light source (26) is not powered in said off position and said switch (32) being turned on when the lighting portion (12) is in an on position such that the light source (26) is powered and emits light in said on position.

4. Trim part according to any one of claims 1 to 3, wherein the outer face (6, 20, 22) of the decorative element comprises a continuous aspect extending over the main body and the lighting portion (12).

5. Trim part according to any one of claims 1 to 4, wherein the light source (26) comprises at least one light-emitting diode (28) placed between the inner face (16) and the outer face (22) of the lighting portion (12).

6. Trim part according to any one of claims 1 to 5, wherein the trim element is a door panel, a dashboard panel or a central console of a vehicle.

## Patentansprüche

1. Verkleidungsteil (1) für einen Fahrzeuginnenraum, umfassend eine Außenfläche (2), die dazu bestimmt ist, vom Inneren des Fahrzeuginnenraums aus sichtbar zu sein, und ein Dekorelement (4), das sich auf einem Teil der Außenfläche (2) erstreckt, das Dekorelement (4) umfassend eine Innenseite (6, 14, 16), die an der Außenfläche (2) anliegt, und eine Außenseite (8, 20, 22) gegenüber der Innenseite (864) und dazu bestimmt ist, vom Innenraum des Fahrzeugs aus sichtbar zu sein, das Dekorelement (4) umfassend einen Hauptkörper (10) und einen Beleuchtungsabschnitt (12) sowie eine Lichtquelle (26) in dem Beleuchtungsabschnitt (12), wobei in dem Beleuchtungsabschnitt (12) die Außenseite (22) angeordnet ist, sodass das Licht von der Lichtquelle (26) nicht durch die Außenseite (22) sichtbar ist, und die Innenseite (16) angeordnet ist, sodass das Licht von der Lichtquelle (26) durch die Innenseite (16) sichtbar ist, wobei der Beleuchtungsabschnitt (12) in Bezug auf den Hauptkörper (10) zwischen einer Aus-Position, in der die Innenseite (16) des Beleuchtungsabschnitts (12) der Außenfläche (2) zugewandt ist und das Licht der Lichtquelle (26) vom Inneren des Fahrzeuginnenraums aus nicht sichtbar ist, und mindestens einer Ein-Position, in der die Innenseite (16) des Beleuchtungsabschnitts (12) von der Außenfläche (2) wegbewegt ist, sodass das Licht der Lichtquelle (26) im Fahrzeuginnenraum gestreut wird, bewegbar ist,
wobei der Beleuchtungsabschnitt (12) in Bezug auf den Hauptkörper (10) um eine Achse (A) des Dekorelements (4), entlang der sich das Dekorelement (4) erstreckt, drehbar beweglich ist,
**dadurch gekennzeichnet, dass** sich die Innenseite (16) des Beleuchtungsabschnitts (12) in der Aus-Position in der Kontinuität der Innenseite (14) des Hauptkörpers (10) erstreckt und in der Ein-Position in Bezug auf die Innenseite (14) des Hauptkörpers (10) um einen Drehwinkel gedreht ist,
wobei der Drehwinkel in einer Ein-Position 180° ist, sodass sich die Innenseite (16) des Beleuchtungsabschnitts (12) in der Ein-Position in der Fortsetzung der Außenseite (20) des Hauptkörpers (10) erstreckt,
wobei das Dekorelement (4) in Bezug auf die Außenfläche (2) zwischen einer verriegelten Position, in der die Innenseite (6, 14, 16) des Dekorelements (4) an der Außenfläche (2) anliegt, und einer entriegelten Position, in der die Innenseite (6, 14, 16) des Dekorelements (4) von der Außenfläche (2) beabstandet ist, bewegbar ist, und
wobei der Beleuchtungsabschnitt (12) in der verriegelten Position des dekorativen Elements (4) nicht in eine Ein-Position bewegbar ist und in der entriegelten Position des dekorativen Elements (4) in eine Ein-Position bewegbar ist, und
wobei das Dekorelement (4) in Bezug auf die Außenfläche (2) um eine Drehachse (B) im Wesentlichen senkrecht zu der Achse (A) des Dekorelements (4), entlang der sich das Dekorelement (4) erstreckt und in der Außenfläche (2) zwischen der verriegelten Position und der entriegelten Position enthalten ist, drehbar beweglich ist.

2. Verkleidungsteil nach Anspruch 1, umfassend eine Drück-Drück-Vorrichtung, die in der verriegelten Position betätigt werden kann, um das Dekorelement (2) von der verriegelten Position in die entriegelte Position zu bewegen.

3. Verkleidungsteil nach Anspruch 1 oder 2, umfassend eine Stromquelle (30), die mit der Lichtquelle (26) verbunden ist, und einen Schalter (32) zwischen der Stromquelle (30) und der Lichtquelle (26), wobei der Schalter (32) ausgeschaltet wird, wenn der Beleuchtungsabschnitt (12) in der Aus-Position ist, sodass die Lichtquelle (26) in der Aus-Position nicht mit Strom versorgt wird, und der Schalter (32) eingeschaltet wird, wenn der Beleuchtungsabschnitt (12) in einer Ein-Position ist, sodass die Lichtquelle (26) in der Ein-Position mit Strom versorgt wird und Licht emittiert.

4. Verkleidungsteil nach einem der Ansprüche 1 bis 3, wobei die Außenseite (6, 20, 22) des Dekorelements ein durchgehendes Aussehen umfasst, das sich über den Hauptkörper und den Beleuchtungsabschnitt (12) erstreckt.

5. Verkleidungsteil nach einem der Ansprüche 1 bis 4, wobei die Lichtquelle (26) mindestens eine Leuchtdiode (28) umfasst, die zwischen der Innenseite (16) und der Außenseite (22) des Beleuchtungsabschnitts (12) angeordnet ist.

6. Verkleidungsteil nach einem der Ansprüche 1 bis 5, wobei das Verkleidungselement eine Türverkleidung, ein Armaturenbrett oder eine Mittelkonsole eines Fahrzeugs ist.

## Revendications

1. Pièce de garniture (1) pour un habitacle de véhicule comprenant une surface externe (2) destinée à être visible depuis l'intérieur de l'habitacle de véhicule et un élément décoratif (4) s'étendant sur une partie de la surface externe (2), ledit élément décoratif (4) comprenant une face interne (6, 14, 16) appliquée contre la surface externe (2) et une face externe (8, 20, 22) opposée à la face interne (864) et destinée à être visible depuis l'intérieur du compartiment de véhicule, l'élément décoratif (4) comprenant un corps principal (10) et une partie d'éclairage (12), et une source de lumière (26) dans ladite partie d'éclairage (12), dans lequel, dans la partie d'éclairage (12), la face externe (22) est agencée de telle sorte que la lumière provenant de la source de lumière (26) n'est pas visible à travers ladite face externe (22) et la face interne (16) est agencée de telle sorte que la lumière provenant de la source de lumière (26) est visible à travers ladite face interne (16), la partie d'éclairage (12) étant mobile par rapport au corps principal (10) entre une position d'arrêt, dans laquelle la face interne (16) de la partie d'éclairage (12) est tournée vers la surface externe (2) et la lumière provenant de la source de lumière (26) n'est pas visible depuis l'intérieur de l'habitacle de véhicule, et au moins une position de marche, dans laquelle la face interne (16) de la partie d'éclairage (12) est éloignée de la surface externe (2) de telle sorte que la lumière provenant de la source de lumière (26) est diffusée dans l'habitacle de véhicule,
dans laquelle la partie d'éclairage (12) est mobile en rotation par rapport au corps principal (10) autour d'un axe (A) de l'élément décoratif (4) le long duquel ledit élément décoratif (4) s'étend,
**caractérisée en ce que** la face interne (16) de la partie d'éclairage (12) s'étend dans la continuité de la face interne (14) du corps principal (10) dans la position d'arrêt et étant tournée d'un angle de rotation par rapport à la face interne (14) du corps principal (10) dans la position de marche,
dans laquelle l'angle de rotation est de 180° dans une position de marche, de sorte que la face intérieure (16) de la partie d'éclairage (12) s'étend dans la continuité de la face externe (20) du corps principal (10) dans ladite position de marche,
dans laquelle l'élément décoratif (4) est mobile par rapport à la surface externe (2) entre une position verrouillée, dans laquelle la face interne (6, 14, 16) de l'élément décoratif (4) est appliquée contre la surface externe (2) et une position déverrouillée, dans laquelle la face interne (6, 14, 16) de l'élément décoratif (4) est espacée de la surface externe (2), et
dans laquelle la partie d'éclairage (12) n'est pas mobile vers une position de marche dans la position verrouillée de l'élément décoratif (4) et est mobile vers une position de marche dans la position déverrouillée de l'élément décoratif (4), et
dans laquelle l'élément décoratif (4) est mobile en rotation par rapport à la surface externe (2) autour d'un axe de rotation (B) sensiblement perpendiculaire à l'axe (A) de l'élément décoratif (4) le long duquel ledit élément décoratif (4) s'étend et est contenu dans la surface externe (2) entre la position verrouillée et la position déverrouillée.

2. Pièce de garniture selon la revendication 1, comprenant un dispositif de poussée-poussée actionnable dans la position verrouillée pour déplacer l'élément décoratif (2) de la position verrouillée à la position déverrouillée.

3. Pièce de garniture selon la revendication 1 ou 2, comprenant une source d'alimentation (30) connectée à la source de lumière (26) et un commutateur (32) entre la source d'alimentation (30) et la source de lumière (26), ledit commutateur (32) étant désactivé lorsque la partie d'éclairage (12) se trouve dans la position d'arrêt de sorte que la source de lumière (26) n'est pas alimentée dans ladite position d'arrêt et ledit commutateur (32) étant activé lorsque la partie d'éclairage (12) se trouve dans une position de marche de sorte que la source de lumière (26) est alimentée et émet de la lumière dans ladite position de marche.

4. Pièce de garniture selon l'une quelconque des revendications 1 à 3, dans laquelle la face externe (6, 20, 22) de l'élément décoratif comprend un aspect continu s'étendant sur le corps principal et la partie d'éclairage (12).

5. Pièce de garniture selon l'une quelconque des revendications 1 à 4, dans laquelle la source de lumière (26) comprend au moins une diode électroluminescente (28) placée entre la face interne (16) et la face externe (22) de la partie d'éclairage (12).

6. Pièce de garniture selon l'une quelconque des revendications 1 à 5, dans laquelle l'élément de garniture est un panneau de porte, un panneau de tableau de bord ou une console centrale d'un véhicule.
